# EUROPÄISCHE PATENTSCHRIFT

(11) **EP 1 129 885 B1**
(45) Veröffentlichungstag und Bekanntmachung des Hinweises auf die Patenterteilung: **26.07.2006**
(21) Anmeldenummer: 01102131.8
(22) Anmeldetag: 01.02.2001
(51) Int. Cl.: B60K 31/04, B60R 16/02, B62D 1/06

(54) **System zur Geschwindigkeitsregelung für ein Fahrzeug, mit einem Multifunktions-Bedienelement**
Cruise control system for a vehicle with a multi-functional selector / control device
Régulateur de vitesses avec un sélecteur multifonctionnel pour véhicules

(30) Priorität: 04.03.2000 DE 10010747
(43) Veröffentlichungstag der Anmeldung: 05.09.2001
(73) Patentinhaber: Volkswagen Aktiengesellschaft, 38436 Wolfsburg (DE)
(72) Erfinder: Crull, Torsten, 38106 Braunschweig (DE); Bartels, Florian, 38302 Wolfenbüttel (DE); Ruchatz, Thomas, Dipl.-Ing., 38165 Lehre (DE)

(56) Entgegenhaltungen:
- EP-A- 0 980 084
- WO-A-98/50246
- DE-A- 19 919 457
- DE-C- 19 646 104
- US-A- 5 382 206
- US-A- 5 390 119
- US-A- 5 477 457
- US-A- 5 992 256
- PATENT ABSTRACTS OF JAPAN vol. 1999, no. 04, 30. April 1999 (1999-04-30) -& JP 11 020506 A (MAZDA MOTOR CORP), 26. Januar 1999 (1999-01-26)
- PATENT ABSTRACTS OF JAPAN vol. 007, no. 197 (M-239), 27. August 1983 (1983-08-27) & JP 58 096142 A (NIPPON DENSO KK), 8. Juni 1983 (1983-06-08)
- PATENT ABSTRACTS OF JAPAN vol. 010, no. 081 (M-465), 29. März 1986 (1986-03-29) -& JP 60 222329 A (MITSUBISHI DENKI KK), 6. November 1985 (1985-11-06)

## Beschreibung

Die Erfindung betrifft ein System zur Geschwindigkeitsregelung für ein Kraftfahrzeug mit einem Multifunktions-Bedienelement.

Die DE 43 38 098 C2 offenbart einen Bedienhebel für eine Geschwindigkeitsregelanlage eines Kraftfahrzeuges, der zur Ansteuerung einer Mehrzahl von Funktionen geeignet ist. Der Bedienhebel ist im Bereich des Lenkrades angebracht und kann zur Ansteuerung der verschiedenen Funktionen in ± x- und ± z-Richtung tastend bewegt werden, wobei in der z-Richtung erste Funktionen die Sollgeschwindigkeit beeinflussen und in der x-Richtung zweite Funktionen den Abruf einer gespeicherten Sollgeschwindigkeit sowie die Ausschaltung der Geschwindigkeltsregelanlage bewirken. Über definierte Druckpunkte kann der Bedienhebel in x-und z-Richtung tastend bewegt werden, um Zusatzfunktionen anzusteuern. Nachteilig bei dem zuvor beschriebenen Bedienhebel ist einerseits, daß dieser zusätzlich zu weiteren Bedienhebeln am Lenkrad angeordnet werden muß, wodurch eine unübersichtliche und teilweise auch den Fahrer verwirrende Vielzahl von Bedienmöglichkeiten entstehen. Darüber hinaus ist für eine Unterscheidung der verschiedenen Funktionen erforderlich, daß der Fahrer die unterschiedlichen Funktionen den entsprechenden Bedienrichtungen, die zu dem teilweise mehrstufig ausgebildet sind, zuordnet. Die Bedienung der Geschwindigkeitsregelautomatik ist somit gewöhnungsbedürftig und nicht ohne weiteres intuitiv einem Fahrer zugänglich.

Aus den Druckschriften DE 33 31 971 A1, DE G 91 06 579, DE 196 04 351 A1 und DE 197 39 354 A1 sind jeweils Bedienelemente bekannt, die am Lenkrad eines Kraftfahrzeuges im Bereich der Prallplatte angeordnet sind. Mit den Bedienelementen können die verschiedensten Funktionen eines Kraftfahrzeuges gesteuert werden, so bspw. die Lichtanlage, eine Betätigung eines Signalhorns und auch das Ein- und Ausschalten eines Tempomates.

Weiterhin sind aus der gattungsgemäßen JP 110 20 506 verschiedene Bedienkonzepte zur Geschwindigkeits- und Abstandsregelung bekannt, deren Bedieneinrichtung an unterschiedlichen Orten im Fahrzeug angeordnet werden kann. Die US 5,382,206 beschreibt ein Verfahren zur Geschwindigkeits- und Abstandsregelung bei dem eine eingestellte Geschwindigkeit gespeichert und später wieder abrufbar ist. Die EP 980 084 hingegen offenbart einen Wippschatter einer Geschwindigkeits- und Abstandsregelung zum Verändern der eingestellten Geschwindigkeit in zwei Richtungen.

Der Erfindung liegt das technische Problem zugrunde, ein System zur Geschwindigkeitsregelung mit einem Multifunktions-Bedienelement zu schaffen, mit dem ein übersichtliches Bedienen der verschiedenen Funktionen einer automatischen Abstandsregelung und/oder einer Geschwindigkeitsregelung für ein Kraftfahrzeug ermöglicht werden.

Das zuvor aufgezeigte technische Problem wird erfindungsgemäß durch ein System zur Geschwindigkeitsregelung mit den Merkmalen des Anspruches 1 gelöst.

Es sind mindestens drei Bedienelemente vorgesehen, mit denen die verschiedenen Funktionen wie im folgenden einzeln dargestellt betätigt werden können. Ein erstes Bedienelement, das bspw. mit einem "+" gekennzeichnet ist und im folgenden als PLUS bezeichnet wird, dient einem Einstellen einer Sollgeschwindigkeit und einem Verändern der Sollgeschwindigkeit in einer ersten Richtung. Ein zweites Bedienelement, das bspw. ein "-" trägt und das im folgenden mit "MINUS" bezeichnet wird, dient einem Einstellen bzw. Setzen der Sollgeschwindigkeit und/oder einem Verändern der Sollgeschwindigkeit in einer zweiten Richtung. Ein drittes Bedienelement, das im folgenden als ON/OFF bezeichnet wird, dient einem Aktivieren und Deaktivieren der Geschwindigkeits- und/oderAbstandsregelung.

Des weiteren ist ein viertes Bedienelement, im folgenden mit CANCEL bezeichnet, vorgesehen, das zum Aussetzen der Geschwindigkeitsregelung und/oder der Abstandsregelung dient, wobei eine Betätigung dieses Bedienelementes eine Speicherung der aktuellen Sollgeschwindigkeit auslöst. Wird die Geschwindigkeitsregelung und/oder Abstandsregelung durch nochmaliges Betätigen des vierten Bedienelementes oder eines gegebenenfalls vorgesehenen fünften Bedienelementes, im folgenden RESUME genannt, wiederaufgenommen, übernimmt die Geschwindigkelts- und/oder Abstandsregelung den gespeicherten Wert der Sollgeschwindigkeit als aktuelle Sollgeschwindigkeit. Somit findet eine eindeutige Trennung der Funktionen des vierten Bedienelementes CANCEL und des fünften Bedienelementes RESUME statt.

Zusätzlich kann das erfindungsgemäße Multifunktions-Bedienelement ein sechstes Bedienelement BE aufweisen, mit dessen Hilfe die vom System aufgrund unterschiedlicher Parameter ermittelte Folgezeit zu einem vorausfahrenden Fahrzeug der Abstandsregelung manuell verändert wird.

Die Folgezeit ist dabei als die Zeitspanne definiert, mit der das abstandsgeregelte Kraftfahrzeug einem vorausfahrenden Kraftfahrzeug folgen soll. Das Produkt aus Folgezeit und aktuell gefahrener Geschwindigkeit ergibt dann den Folgeabstand bzw. Sollabstand.

Das zuvor beschriebene Multifunktions-Bedienelement stellt eine hochintegrierte Einheit dar, mit der sämtliche Funktionen sowohl der automatischen Abstandsregelung als auch der Geschwindigkeitsregelung bedient werden können. Da beide automatischen Regeleinheiten das Fahrverhalten des Kraftfahrzeuges beeinflussen, gehören diese Funktionen für einen Fahrer thematisch zusammen. Die Bedienbarkeit des erfindungsgemäßen Multifunktions-Bedienelementes wird gefördert, da der Fahrer sämtliche unterschiedlichen Funktionen an örtlich zusammengefaßten Bedienelementen einstellen kann. Da zudem die Bedienelemente dem Fahrer zugewandt sind, können diese sinnfällige Beschriftungen aufweisen, so daß trotzt einer Vielzahl unterschiedlicher Funktionen ein sicheres und komfortables Bedienen der einzelnen Funktionen mit Hilfe des Multifunktions-Bedienelementes möglich ist.

In bevorzugter Weise bewirkt das erste Bedienelement PLUS bei einer ersten Betätigung eine Übernahme der aktuell gefahrenen Geschwindigkeit des Kraftfahrzeuges als Sollgeschwindigkeit in das System. Des weiteren bewirkt das erste Bedienelement PLUS bei einer innerhalb einer vorgegebenen Zeitspanne nach einer ersten Betätigung erfolgenden weiteren Betätigung die Veränderung der Sollgeschwindigkeit in der ersten Richtung. Das bedeutet, daß für ein Einschalten und ein Inertialisieren der Geschwindigkeitsregelung das erste Bedienelement einmal oder in kurzen Zeitabständen mehrfach betätigt werden kann, um bspw. die aktuell gefahrene Geschwindigkeit oder eine demgegenüber vergrößerte Geschwindigkeit als Sollgeschwindigkeit der Geschwindigkeitsregelung zu übergeben.

Das zweite Bedienelement MINUS dient in einer Ausführungsform dann durch einfaches oder mehrfaches Betätigen einer Veränderung der Sollgeschwindigkeit in negativer Richtung. Somit kann ausgehend von der aktuell gefahrenen Geschwindigkeit mittels des ersten Bedienelementes PLUS und durch nachfolgende Betätigung des ersten Bedienelementes PLUS oder des zweiten Bedienelementes MINUS der Wert der Sollgeschwindigkeit eingestellt werden. Dabei ist es bevorzugt, daß die Veränderung der Sollgeschwindigkeit durch Betätigen des ersten Betätigungselementes PLUS und des zweiten Betätigungselementes MINUS um jeweils eine vorgegebene Geschwindigkeitsdifferenz in positiver bzw. negativer Richtung erfolgt.

In einer anderen Ausführungsform ist der ersten Betätigung des zweiten Bedienelementes MINUS ebenso wie der ersten Betätigung des ersten Bedienelementes PLUS die Übernahme der aktuell gefahrenen Geschwindigkeit als Sollgeschwindigkeit zugeordnet.

Entscheidet der Fahrer, daß die durch die Betätigung der beiden Bedienelemente PLUS und MINUS eingestellte Sollgeschwindigkeit richtig ist, so kann der eingestellte Wert, dann, wenn eine weitere vorgegebene Zeitspanne nach einer Betätigung eines der beiden Bedienelemente PLUS oder MINUS verstrichen ist, automatisch an das System übergeben wird. Alternativ dazu kann auch ein siebentes Bedienelement, das als SET bezeichnet wird, vorgesehen sein, durch dessen Betätigung eine Übernahme des eingestellten Wertes der Sollgeschwindigkeit durch das System bewirkt wird. Somit kann der Fahrer aktiv entscheiden, ob der eingestellte Wert an das System übergeben wird und in Zukunft als Sollgeschwindigkeit von der Geschwindigkeitsregelung verwendet wird.

In diesem Fall sind das erste Bedienelement PLUS und das zweite Bedienelemente MINUS nur zur Veränderung der Sollgeschwindigkeit vorgesehen.

Weiterhin kann vorgesehen sein, daß bei einer ersten Betätigung des siebenten Bedienelementes SET die aktuell gefahrene Geschwindigkeit des Kraftfahrzeuges als Sollgeschwindigkeit übernommen wird. Bei allen darauf folgenden Betätigungen des Bedienelementes wird dann die Sollgeschwindigkeit in eine erste Richtung verändert. Die Veränderung der Sollgeschwindigkeit erfolgt bei Betätigung des Bedienelementes SET jedoch in anderen Schritten als beim ersten oder zweiten Bedienelement. Zusätzlich kann auch vorgesehen sein, daß die Betätigung des fünften Bedienelementes RESUME die Veränderung der Sollgeschwindigkeit bei aktivierter Geschwindigkeitsregelung in die entgegengesetzte Richtung, jedoch in gleichen Schritten wie die Betätigung des Bedienelementes SET, bewirkt.

Das zuvor beschriebene Multifunktions-Bedienelement, ist an dem Rand eines Lenkradprallkörpers des Kraftfahrzeuges angeordnet.

Bei der Zuordnung des Multifunktions-Bedienelementes am Lenkrad des Kraftfahrzeuges ist das Bedienelement vorzugsweise benachbart zu einer weiteren Bedien- oder Betätigungseinrichtung (Hupe), wobei das Multifunktions-Bedienelement als Modul und die weitere Bedieneinrichtung zueinander beweglich angeordnet sind.

Die Erfindung wird im folgenden anhand von mehreren Ausführungsbeispielen näher erläutert. Die zugehörigen Zeichnungen zeigen:
- Fig. 1: ein Blockschaltbild einer Geschwindigkeits- und Abstandsregelung,
- Fig. 2: ein erstes Ausführungsbeispiel eines erfindungsgemäßen Multifunktions-Bedienelementes,
- Fig. 3: ein zweites Ausführungsbeispiel eines erfindungsgemäßen Multifunktions-Bedienelementes und
- Fig. 4: ein drittes Ausführungsbeispiel eines erfindungsgemäßen Multifunktions-Bedienelementes.

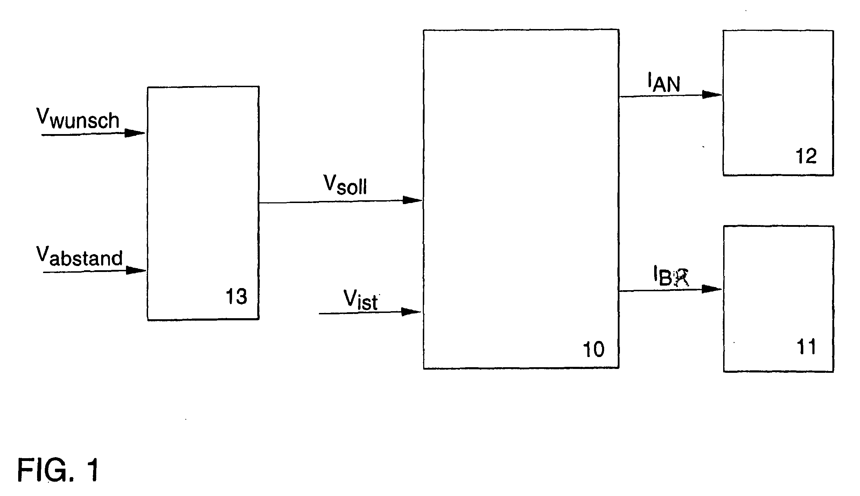

In Fig. 1 ist das Blockschaltbild einer kombinierten Geschwindigkeits- und Abstandsregelung gezeigt.

Vor Aktivierung der Geschwindigkeits- und Abstandsregelung stellt der Fahrer eine seinen Wünschen entsprechende Sollgeschwindigkeit v_{wunsch} ein. Dies geschieht, indem durch Betätigung eines dafür vorgesehenen Bedienelementes in einem ersten Schritt die momentan gefahrene Geschwindigkeit des Fahrzeuges als Sollgeschwindigkeit v_{wunsch} von der Geschwindigkeits- und Abstandsregelung übernommen wird. Durch die nochmalige Betätigung des selben Bedienelementes oder eines anderen dafür vorgesehenen Bedienelementes kann die Sollgeschwindigkeit v_{wunsch} in Richtung Erhöhung bzw. in Richtung Erniedrigung verändert werden. Ist die Straße vor dem Kraftfahrzeug frei und befindet sich kein Fahrzeug in einem bestimmten geschwindigkeitsabhängigen Abstand vor dem Kraftfahrzeug wird die Sollgeschwindigkeit v_{wunsch} von einer Einrichtung 13 als Sollwert vₛₒₗₗ von der Regeleinrichtung 10 übernommen, die im einfachsten Fall in Abhängigkeit der Differenz zwischen der Istgeschwindigkeit vᵢₛₜ und dem Sollwert vₛₒₗₗ eine Stellgröße I_{BR} und I_{AN} für die Bremseinrichtung 11 und/oder die Antriebsmaschine 12 des Kraftfahrzeuges erzeugt.

Befindet sich vor dem Kraftfahrzeug ein vorausfahrendes Fahrzeug, wird eine abstandsabhängige Sollgeschwindigkeit v_{abstand} ermittelt und in der Einrichtung 13 mit der Sollgeschwindigkeit v_{wunsch} verglichen und der kleinere Wert der beiden Sollgeschwindigkeiten als Sollwert vₛₒₗₗ übernommen. Die abstandsabhängige Sollgeschwindigkeit v_{abstand} berechnet sich dabei aus einer Folgezeit zu dem vorausfahrenden Fahrzeug, die sich wiederum zumindest aus der Geschwindigkeit des vorausfahrenden Fahrzeuges bestimmt. Diese vom System berechnete Folgezeit kann wiederum über ein Bedienelement in bestimmten Grenzen vom Fahrer verändert werden. In diesem Zusammenhang soll auf die DE 196 24 616 A1 verwiesen werden, die ein Verfahren zur Veränderung der Folgezeit offenbart.

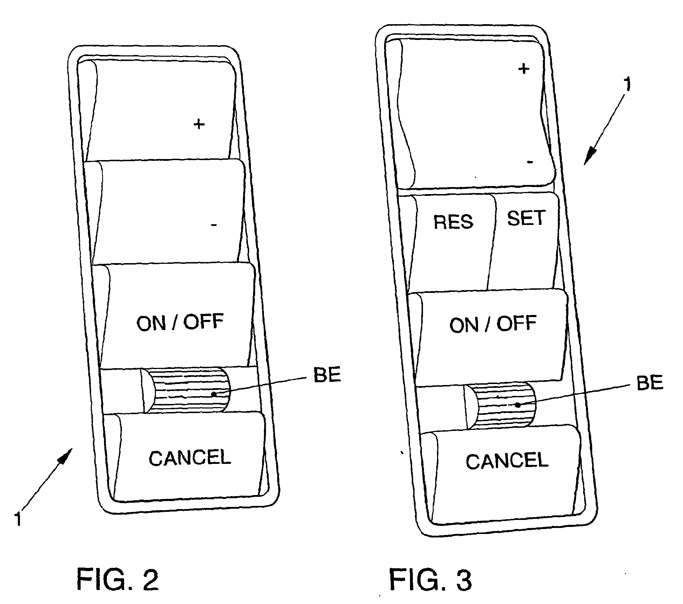

In Fig. 2 ist ein erstes Ausführungsbeispiel eines erfindungsgemäßen Multifunktions-Bedienelementes 1 für eine Bedienung eines kombinierten Systems einer automatischen Abstandsregelung und einer Geschwindigkeitsregelung für ein Kraftfahrzeug gezeigt. Es sind insgesamt fünf Bedienelemente vorgesehen. Das in Fig. 2 oberste Bedienelement ist das zuvor beschriebene erste Bedienelement PLUS, das mit einem "+" -Zeichen gekennzeichnet ist. Darunter befindet sich das zweite Bedienelement MINUS, das mit einem "-" -Zeichen gekennzeichnet ist. Am unteren Ende des Multifunktions-Bedienelementes 1 in Fig. 2 befindet sich das vierte Bedienelement CANCEL, während unterhalb des zweiten Bedienelementes MINUS das dritte Bedienelement ON/OFF angeordnet ist. Weiterhin ist das sechste Bedienelement BE zwischen dem vierten Bedienelement CANCEL und dem dritten Bedienelement ON/OFF angeordnet.

Die Bedienelemente PLUS, MINUS, ON/OFF und CANCEL sind im vorliegenden Ausführungsbeispiel als Taster ausgebildet, die ausgehend von einer monostabilen Lage in einer Richtung betätigt werden können und nach einer Betätigung wieder in die monostabile Lage zurückkehren. Durch jedes Betätigen kann ein elektrisches Signal erzeugt werden, das über - in der Zeichnung nicht dargestellt - elektrische Leitungen mit entsprechenden Steuereinheiten der automatischen Abstandsregelung und der Geschwindigkeitsregelung übertragen werden.

Das sechste Bedienelement BE ist im vorliegenden Ausführungsbeispiel als Rändelrad ausgebildet, so daß durch ein Drehen dieses Bedienelementes (BE) der für die Durchführung der automatischen Abstandsregelung verwendeten Wertes der Folgezeit eingestellt werden kann, wie beispielsweise in der DE 196 24 616 A1 beschrieben.

Dabei ist das Rändelrad in bevorzugter Weise ohne mechanischen Anschlag ausgebildet und erzeugt bei einer drehenden Betätigung pro Teildrehung ein elektrisches Signal, so daß inkremental der Wert der Folgezeit vom System verändert werden kann. Bei einem Neustart bzw. bei einer neuen Aktivierung der automatischen Abstandsregelung setzt dann das System den Wert der Folgezeit auf einen vorgegebenen Wert, der dann durch eine Drehung des Rändelrades in die eine oder die andere Richtung verändert werden kann. Dadurch wird der Komfort der Betätigung des sechsten Bedienelementes BE erheblich verbessert.

In Fig. 3 ist ein zweites Ausführungsbeispiel eines erfindungsgemäßen Multifunktions-Bedienelementes dargestellt. Das vierte Bedienelement CANCEL, das dritte Bedienelement ON/OFF und das sechste Bedienelement BE sind in gleicher Weise ausgebildet, wie es zuvor anhand des in Fig. 2 dargestellten Ausführungsbeispieles detailliert beschrieben worden ist.

Die beiden Bedienelemente PLUS und MINUS sind entgegen dem ersten Ausführungsbeispiel, siehe Fig. 2, nicht als zwei separate Taster, sondern paarweise als Wipptaster ausgebildet. Der Wipptaster weist eine mittlere monostabile Lage auf, von der ausgehend der obere Teil als erstes Bedienelement PLUS und der untere Teil als zweites Bedienelement MINUS gedrückt und somit verschwenkt werden kann, um eine entsprechende Betätigung des jeweiligen Bedienelementes auszuführen. Wird das erste oder zweite Bedienelement nach einer Betätigung wieder losgelassen, so kehrt der Wipptaster in die monostabile Lage zurück. Da gerade das erste Bedienelement PLUS und das zweite Bedienelement MINUS häufig abwechselnd oder nachfolgend betätigt werden, ist die Ausgestaltung als Wipptaster besonders vorteilhaft.

Zusätzlich zu dem in Fig. 2 dargestellten Ausführungsbeispiel ist gemäß Fig. 3 ein siebentes Bedienelement SET vorgesehen, das bei einer Betätigung eine Übernahme des eingestellten Wertes der Sollgeschwindigkeit v_{wunsch} durch das System bewirkt. Damit kann die oben beschriebenen Übernahme des Wertes aktiv vom Benutzer vorgenommen werden.

Weiterhin ist ein fünftes Bedienelement RESUME vorgesehen, das bei einer Betätigung die deaktivierte Geschwindigkeitsregelung aktiviert und eine Übernahme des gespeicherten der Sollgeschwindigkeit v_{wunsch} durch das System bewirkt. Somit können das vierte Bedienelement CANCEL und das fünfte Bedienelement RESUME im Wechsel zueinander betätigt werden, um die Geschwindigkeitsregelung zu aktivieren und zu deaktivieren, wobei jeweils eine Speicherung oder ein Auslesen des voreingestellten Wertes der Sollgeschwindigkeit V_{wunsch} bewirkt wird.

Das sechste Bedienelement SET und das siebte Bedienelement RESUME sind, wie in Fig. 3 dargestellt ist, als Taster ausgebildet, die nebeneinander angeordnet sind und nur die Hälfte der Breite der anderen Bedienelemente einnehmen. Da die beiden Bedienelemente SET und RESUME nicht so häufig wie die anderen Bedienelemente benötigt werden, ist eine geringere Angreiffläche vertretbar, die sich positiv auf die Ergonomie und Kompaktheit des Multifunktions-Bedienelementes auswirkt.

Außerdem kann den Bedienelementen RESUME und SET eine weitere Funktion zugeordnet werden. Durch Ihre Betätigung wird dann die Sollgeschwindigkeit v_{wunsch} der Geschwindigkeitsregelung erhöht bzw. erniedrigt, jedoch in einer anderen Intervall- oder Schriftgröße als durch die Betätigung der Bedienelemente PLUS und MINUS. Wenn die Sollgeschwindigkeit v_{wunsch} durch die Betätigung der Bedienelemente PLUS und MINUS in 10er Schritten erhöht bzw. erniedrigt wird, erfolgt die Veränderung der Sollgeschwindigkeit durch die Betätigung der Bedienelemente RESUME und SET in 1er Schritten.

Zu sämtlichen zuvor beschriebenen Funktionen der automatischen Abstands- und der Geschwindigkeitsregelung werden die eingestellten Werte auf einer nicht dargestellten Anzeige wiedergegeben. Somit können die mit dem Multifunktions-Bedienelement eingestellten Parameter vom Benutzer überprüft werden.

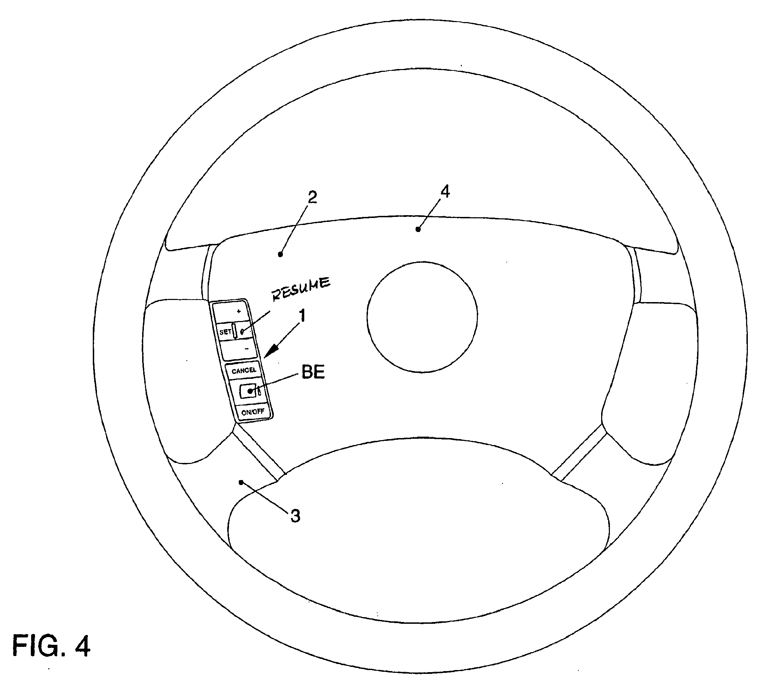

In Fig. 4 ist ein weiteres Ausführungsbeispiel des erfindungsgemäßen Multifunktions-Bedienelementes 1 angeordnet auf einem Lenkrad 3 eines Kraftfahrzeuges gezeigt. Das Multifunktions-Bedienelement besteht hier aus den als Taster ausgebildeten Bedienelementen PLUS, MINUS, SET; RESUME, CANCEL und ON/OFF und dem als Rändelrad ausgebildeten Bedienelementen BE. Die Funktion der einzelnen Bedienelemente gleicht denen der Bedienelemente aus den Ausführungsbeispielen der Fig. 2 und Fig. 3.

Das Multifunktions-Bedienelement 1 ist dabei erfindungsgemäß am Rand des Prallkörpers 4 des Lenkrades 3, vorzugsweise in unmittelbarer Nachbarschaft zu der Bedien- bzw. Betätigungseinrichtung 2 der Hupe angeordnet. Um eine ungewollte Betätigung des jeweils anderen Bedienelementes 2, 1 bei der Betätigung des Bedienelementes 1, 2 auszuschließen, sind beide zueinander beweglich ausgebildet.

### BEZUGSZEICHENLISTE

- 1: Multifunktions-Bedienelement
- 2: Bedieneinrichtung
- 3: Lenkrad
- 4: Prallkörper
- 10: Regeleinrichtung
- 11: Bremseinrichtung
- 12: Antriebsmaschine
- 13: Einrichtung

- PLUS: erstes Bedienelement
- MINUS: zweites Bedienelement
- ON/OFF: drittes Bedienelement
- CANCEL: viertes Bedienelement
- RESUME: fünftes Bedienelement
- BE: sechste Bedienelement
- SET: siebentes Bedienelement

- V_{wunsch}: Sollgeschwindigkeit
- vₛₒₗₗ: Sollwert
- vᵢₛₜ: Istgeschwindigkeit
- I_{BR}: Stellgröße
- I_{AN}: Stellgröße
- v_{abstand}: abstandsabhängige Sollgeschwindigkeit

## Patentansprüche

1. System zur Geschwindigkeitsregelung für ein Kraftfahrzeug, wobei das System ein Muttifunktions-Bedienelement (1) an einem Lenkrad umfasst, wobei das Multifunktions-Bedienelement (1)
• ein erstes Bedienelement zum Setzen einer Sollgeschwindigkeit (vwunsch) und/oder Verändern der Sollgeschwindigkeit (vwunsch) in einer ersten Richtung aufweist,
**dadurch gekennzeichnet, dass**
das Multifunktions-Bedienelement (1)
• ein zweites Bedienelement zum Setzen einer Sollgeschwindigkeit (vwunsch) und/oder Verändern der Sollgeschwindigkeit (vwunsch) in einer zweiten Richtung und
• ein Bedienelement (ON/OFF) zum Aktivieren und Deaktivieren der Geschwindigkeitsregelung und
• ein Bedienelement (CANCEL) zum Aussetzen der automatischen Geschwindigkeitsregelung äufimeist,
wobei Mittel vorgesehen sind, womit eine Betätigung des Bedienelementes (CANCEL) zum Aussetzen der automatischen Geschwindigkeitsregelung eine Speicherung der aktuellen Sollgeschwindigkeit (vwunsch) auslöst und
wobei die Bedienelemente der automatischen Geschwindigkeitsregelung in einer hochintegrierten Einheit am Rand des Lenkradprallkörpers angeordnet sind.

2. System zur Geschwindigkeitsregelung nach Anspruch 1,
**dadurch gekennzeichnet, dass**
eine Betätigung des Bedienelementes (CANCEL) zum Aussetzen der automatischen Geschwindigkeitsregelung nach dem Aussetzen der Geschwindigkeitsregelung eine Wiederaufnahme der Geschwindigkeitsregelung mit der gespeicherten Sollgeschwlndigken (v_{wunsch}) bewirkt

3. System zur Geschwindigkeitsregelung nach Anspruch 1 oder 2,
**dadurch gekennzeichnet, dass**
ein fünftes Bedienelemente vorgesehen ist, dessen zumindest erste Betätigung nach dem Aussetzen der Geschwindigkeitsregelung durch die Betätigung des Bedienelementes (CANCEL) zum Aussetzen der automatischen Geschwindigkeitsregelungeine wiederaufnahme der Geschwindigkeitsregelung mit der gespeicherten Sollgeschwindigkeit (v_{wunsch}) bewirkt.

4. System zur Geschwindigkeitsregelung nach einem oder mehreren der vorhergehenden Ansprüche,
**dadurch gekennzeichnet, dass**
das erste Bedienelement zum Setzen der Sollgeschwindigkeit (v_{wunsch}) und/oder Verändern der Sollgeschwindigkeit (v_{wunsch}) in einer ersten Richtung und das zweite Bedienelement zum Setzen der Sollgeschwindigkeit (v_{wunsch}) und/oder Verändern der Sollgeschwindigkeit (v_{wunsch}) in einer zweiten Richtung bei einer ersten Betätigung eine Einstellung der aktuell gefahrenen Geschwindigkeit (vᵢₛₜ) des Kraftfahrzeuges als Sollgeschwindigkeit (v_{wunsch}) bewirken.

5. System zur Geschwindigkeitsregelung nach Anspruch 4,
**dadurch gekennzeichnet, dass**
das erste Bedienelement zum Setzen der Sollgeschwindigkeit (v_{wunsch}) und/oder Verändern der Sollgeschwindigkeit (v_{wunsch}) in einer ersten Richtung und das zweite Bedienelement zum Setzen der Sollgeschwindigkeit (v_{wunsch}) und/oder Verändern der Sollgeschwindigkeit (v_{wunsch}) in einer zweiten Richtung bei einer innerhalb einer vorgegebenen Zeitspanne nach einer ersten Betätigung erfolgenden weiteren Betätigung die Veränderung der Sollgeschwindigkeit (v_{wunsch}) bewirken.

6. System zur Geschwindigkeitsregelung nach einem oder mehreren der vorhergehenden Anspruche,
**dadurch gekennzeichnet, dass**
ein siebentes Bedienelement zum Setzen der Sollgeschwindigkeit (v_{wunsch}) vorgesehen ist und das erste Bedienelement zum Setzen der Sollgeschwindigkeit (v_{wunsch}) und/oder Verändern der Sollgeschwindigkeit (v_{wunsch}) in einer ersten Richtung und das zweite Bedienelement zum Setzen der Soltgeschwindigkeit (v_{wunsch}) und/oder Verändern der Sollgeschwindigkeit (v_{wunsch}) in einer zweiten Richtung nur zum Verändern der Sollgeschwindigkeit (v_{wunsch}) vorgesehen sind.

7. System zur Geschwindigkeitsregelung nach Anspruch 6,
**dadurch gekennzeichnet, dass**
zumindest bei der ersten Betätigung des siebenten Bedienelementes die aktuell gefahrene Geschwindigkeit (vᵢₛₜ) des Kraftfahrzeuges als Sollgeschwindigkeit (v_{wunsch}) übernommen wird.

8. System zur Geschwindigkeitsregelung nach einem oder mehreren der vorhergehenden Ansprüche,
**dadurch gekennzeichnet, dass**
das erste Bedienelement zum Setzen der Sollgeschwlhdigkeit (v_{wunsch}) und/oder Verändern der Sollgeschwindigkeit (v_{wunsch}) in einer ersten Richtung und das zweite Bedienelement zum Setzen der Sollgeschwindigkeit (v_{wunsch}) und/oder Verändern der Sollgeschwindigkeit (v_{wunsch}) In einer zweiten Richtung bei einer Betätigung zum Verändern des Wertes der Sollgeschwindigkeit (v_{wunsch}) ein Verändern des Wertes in gleich großen Intervallen bewirken.

9. System zur Geschwindigkeitsregelung nach einem der Ansprüche 6 bis 8,
**dadurch gekennzeichnet, dass**
das fünfte Bedienelement bei einer innerhalb einer vorgegeben Zeitspanne nach einer ersten Betätigung erfolgenden weiteren Betätigung die Veränderung der Sollgeschwindlgkeit (v_{wunsch}) in einer ersten Richtung und das siebente Bedienelement bei einer innerhalb einer vorgegebenen Zeitspanne nach einer ersten Betätigung erfolgenden weiteren Betätigung die Veränderung der Sollgeschwindlgkeit (v_{wunsch}) in einer zweiten Richtung bewirkt.

10. System zur Geschwindigkeitsregelung nach Anspruch 9.
**dadurch gekennzeichnet, dass**
das fünfte Bedienelement und das siebente Bedienelement bei einer Betätigung zum Verändern des Wertes der Soligeschwindigkelt (v_{wunsch}) ein Verändern des Wertes in gleich große Intervallen bewirken, wobei die Intervalle sich von den bei der Betätigung des ersten Bedienelementes zum Setzen der Sollgeschwindigkeit (v_{wunsch}) und/oder Verändern der Sollgeschwindigkeit (v_{wunsch}) In einer ersten Richtung und des zweiten Bedienelementes zum Setzen der Sollgeschwindigkelt (v_{wunsch}) und/oder Verändern der Sollgeschwindigkeit (v_{wunsch}) in einer zweiten Richtung vorgesehenen Intervallen unterscheiden.

11. System zur Geschwindigkeitsregelung nach einem oder mehreren der vorhergehenden Ansprüche
**dadurch gekennzeichnet, dass**
das Multifunktions-Bedienelement mindestens ein Bedienelement zum Setzen einer Sollgeschwindigkeit (v_{wunsch}) und/oder Verändern der Sollgeschwindigkeit (v_{wunsch}) in zwei Richtungen aufweist.

12. System zur Geschwindigkeitsregelung, nach einem oder mehreren der vorhergehenden Ansprüche,
**dadurch gekennzeichnet, dass**
zumindest ein Teil der Bedienelemente (ON/OFF, CANCEL) als Tastschalter ausgebildet sind.

13. System zur Geschwindigkeitsregelung nach einem oder mehreren der vorhergehenden Ansprüche,
**dadurch gekennzeichnet, dass**
zumindest ein Teil der Bedienelemente als Wippschalter ausgebildet ist.

14. System zur Geschwindigkeitsregelung nach einem oder mehreren der vorhergehenden Ansprüche,
**dadurch gekennzeichnet, dass**
das Multifunktions-Bedienelement (1) auf dem Prallkörper (4) benachbart zu einer Bedieneinrichtung (2) angeordnet ist.

15. System zur Geschwindigkeitsregelung nach einem oder mehreren der vorhergehenden Ansprüche,
**dadurch gekennzeichnet, dass**
das Multifunktions-Bedienelement (1) und die Bedieneinrichtung (2) unabhängig voneinander beweglich angeordnet sind.

16. System zur Geschwindigkeitsregelung nach einem oder mehreren der vorhergehenden Ansprüche,
**dadurch gekennzeichnet, dass**
das Multifunktions-Bedienelement (1) Bedienelemente für die Bedienung einer automatischen Abstandsregelung aufweist.

17. System zur Geschwindigkeitsregelung nach Anspruch 16,
**dadurch gekennzeichnet, dass**
ein sechstes Bedienelement (BE) zum manuellen Verändern des für die Durchführung der automatischen Abstandsregelung verwendeten Wertes einer Folgezeit zu einem vorausfahrenden Fahrzeug vorgesehen ist.

18. System zur Geschwindigkeitsregelung nach Anspruch 17,
**dadurch gekennzeichnet, dass**
das sechste Bedienelement (BE) als Rändelrad ausgebildet ist.

19. System zur Geschwindigkeitsregelung nach Anspruch 18,
**dadurch gekennzeichnet, dass**
das Bedienelement (BE) ohne mechanischen Anschlag ausgebildet ist und bei einer drehenden Betätigung pro Teildrehung ein elektrisches Signal erzeugt wird.

## Claims

1. Cruise control system for a motor vehicle, the system comprising a multi-functional selector/control element (1) on a steering wheel, the multi-functional selector/control element (1) having
• a first selector/control element for setting a setpoint speed (vrequest) and/or changing the setpoint speed (vrequest) in a first direction,
**characterized in that**
the multi-functional selector/control element (1) has
• a second selector/control element for setting a setpoint speed (vrequest) and/or changing the setpoint speed (vrequest) in a second direction and
• a selector/control element (ON/OFF) for activating and deactivating the cruise control, and
• a selector/control element (CANCEL) for cancelling the automatic cruise control,
means being provided with which actuation of the selector/control element (CANCEL) for cancelling the automatic cruise control triggers storage of the current setpoint speed (vrequest), and
the selector/control elements for the automatic cruise control being arranged in a highly integrated unit at the edge of the steering wheel impact absorbing body.

2. Cruise control system according to Claim 1, **characterized in that** actuation of the selector/control element (CANCEL) for cancelling the automatic cruise control causes the cruise control to be resumed with the stored setpoint speed (v_{request}) after the cruise control has been cancelled.

3. Cruise control system according to Claim 1 or 2, **characterized in that** a fifth selector/control element is provided, an at least first actuation of which after the cancelling of the cruise control by the actuation of the selector/control element (CANCEL) for cancelling the automatic cruise control causes the cruise control to be resumed with the stored setpoint speed (v_{request}).

4. Cruise control system according to one or more of the preceding claims, **characterized in that** the first selector/control element for setting setpoint speed (v_{request}) and/or changing the setpoint speed (v_{request}) in a first direction, and the second selector/control element for setting the setpoint speed (v_{request}) and/or changing the setpoint speed (v_{request}) in a second direction, cause the speed (v_{act}) at which the motor vehicle is currently travelling to be set as a setpoint speed (v_{request}) when a first actuation occurs.

5. Cruise control system according to Claim 4, **characterized in that** the first selector/control element for setting the setpoint speed (v_{request}) and/or changing the setpoint speed (v_{request}) in a first direction, and the second selector/control element for setting the setpoint speed (v_{request}) and/or changing the setpoint speed (v_{request}) in a second direction, cause the setpoint speed (v_{request}) to change when there is a further actuation taking place within a predefined time period after a first actuation.

6. Cruise control system according to one or more of the preceding claims, **characterized in that** a seventh selector/control element for setting the setpoint speed (v_{request}) is provided, and the first selector/control element for setting the setpoint speed (v_{request}) and/or changing the setpoint speed (v_{request}) in a first direction, and the second selector/control element for setting the setpoint speed (v_{request}) and/or changing the setpoint speed (v_{request}) in a second direction, are provided only for changing the setpoint speed (v_{request}).

7. Cruise control system according to Claim 6, **characterized in that** the speed (v_{act}) at which the motor vehicle is currently travelling is transferred as a setpoint speed (v_{request}) at least when the seventh selector/control element is first actuated.

8. Cruise control system according to one or more of the preceding claims, **characterized in that** the first selector/control element for setting the setpoint speed (v_{request}) and/or changing the setpoint speed (v_{request}) in a first direction, and the second selector/control element for setting the setpoint speed (v_{request}) and/or changing the setpoint speed (v_{request}) in a second direction, cause the value to the changed at equally large intervals when actuation occurs in order to change the value of the setpoint speed (v_{request}).

9. Cruise control system according to one of Claims 6 to 8, **characterized in that** the fifth selector/control element causes the setpoint speed (v_{request}) to change in a first direction if there is a further actuation occurring within a predefined time period after a first actuation, and the seventh selector/control element causes the setpoint speed (v_{request}) to change in a second direction if there is a further actuation occurring within a predefined time period after a first actuation.

10. Cruise control system according to Claim 9, **characterized in that** if there is an actuation in order to change the value of the setpoint speed (v_{request}), the fifth selector/control element and the seventh selector/control element cause the value to change at equally large intervals, the intervals differing from the intervals which are provided when the first selector/control element is actuated in order to set the setpoint speed (v_{request}) and/or to change the setpoint speed (v_{request}) in a first direction, and when the second selector/control element is actuated in order to set the setpoint speed (v_{request}) and/or to change the setpoint speed (v_{request}) in a second direction.

11. Cruise control system according to one or more of the preceding claims, **characterized in that** the multi-functional selector/control element has at least one selector/control element for setting a setpoint speed (v_{request}) and/or changing the setpoint speed (v_{request}) in two directions.

12. Cruise control system according to one or more of the preceding claims, **characterized in that** at least some of the selector/control elements (ON/OFF, CANCEL) are embodied as pushbutton keys.

13. Cruise control system according to one or more of the preceding claims, **characterized in that** at least some of the selector/control elements are embodied as rocker switches.

14. Cruise control system according to one or more of the preceding claims, **characterized in that** the multi-functional selector/control element (1) is arranged on the impact absorbing body (4) adjacent to a selector/control device (2).

15. Cruise control system according to one or more of the preceding claims, **characterized in that** the multi-functional selector/control element (1) and the selector/control device (2) are arranged so as to be capable of moving independently of one another.

16. Cruise control system according to one or more of the preceding claims, **characterized in that** the multi-functional selector/control element (1) has selector/control elements for controlling an automatic inter-vehicle distance controller.

17. Cruise control system according to Claim 16, **characterized in that** a sixth selector/control element (BE) is provided for manually changing the value of a following time with respect to a vehicle travelling in front, said value being used to carry out the automatic inter-vehicle distance control.

18. Cruise control system according to Claim 17, **characterized in that** the sixth selector/control element (BE) is embodied as a knurled wheel.

19. Cruise control system according to Claim 18, **characterized in that** the selector/control element (BE) is embodied without a mechanical stop, and in the event of rotating actuation an electrical signal is generated at each part of the rotation.

## Revendications

1. Système de régulation de vitesse pour un véhicule automobile, le système comprenant un élément de commande multifonctionnel (1) sur un volant de direction, l'élément de commande multifonctionnel (1) présentant un premier élément de commande pour définir une vitesse de consigne (V_{wunsch}) et/ou pour modifier la vitesse de consigne (V_{wunsch}) dans une première direction,
**caractérisé en ce que** l'élément de commande multifonctionnel (1) présente
- un deuxième élément de commande pour définir une vitesse de consigne (V_{wunsch}) et/ou pour modifier la vitesse de consigne (V_{wunsch}) dans une seconde direction,
- un élément de commande (ON/OFF) pour activer et désactiver la régulation de vitesse, et
- un élément de commande (CANCEL) pour interrompre la régulation automatique de vitesse,
sachant que des moyens sont prévus par lesquels un actionnement de l'élément de commande (CANCEL) pour interrompre la régulation automatique de vitesse déclenche une mémorisation de la vitesse de consigne actuelle (V_{wunsch}), et
sachant que les éléments de commande de la régulation automatique de vitesse sont disposés dans une unité à haute intégration sur le bord du corps d'impact du volant de direction.

2. Système de régulation de vitesse selon la revendication 1, **caractérisé en ce qu'**un actionnement de l'élément de commande (CANCEL) pour interrompre la régulation automatique de vitesse à la suite de l'interruption de la régulation de vitesse produit une reprise de la régulation de vitesse avec la vitesse de consigne mémorisée (V_{wunsch}) .

3. Système de régulation de vitesse selon la revendication 1 ou 2, **caractérisé en ce qu'**il est prévu un cinquième élément de commande dont au moins le premier actionnement à la suite de l'interruption de la régulation de vitesse par l'actionnement de l'élément de commande (CANCEL) pour interrompre la régulation automatique de vitesse produit une reprise de la régulation de vitesse avec la vitesse de consigne mémorisée (V_{wunsch}).

4. Système de régulation de vitesse selon une ou plusieurs des revendications précédentes, **caractérisé en ce que** le premier élément de commande pour définir la vitesse de consigne (V_{wunsch}) et/ou pour modifier la vitesse de consigne (V_{wunsch}) dans une première direction et le deuxième élément de commande pour définir la vitesse de consigne (V_{wunsch}) et/ou pour modifier la vitesse de consigne (V_{wunsch}) dans une seconde direction produisent, lors d'un premier actionnement, un réglage comme vitesse de consigne (V_{wunsch}) de la vitesse (Vᵢₛₜ) actuellement pratiquée par le véhicule automobile.

5. Système de régulation de vitesse selon la revendication 4, **caractérisé en ce que** le premier élément de commande pour définir la vitesse de consigne (V_{wunsch}) et/ou pour modifier la vitesse de consigne (V_{wunsch}) dans une première direction et le deuxième élément de commande pour définir la vitesse de consigne (V_{wunsch}) et/ou pour modifier la vitesse de consigne (V_{wunsch}) dans une seconde direction produisent, lors d'un nouvel actionnement ayant lieu dans un intervalle de temps prédéfini à la suite d'un premier actionnement, la modification de la vitesse de consigne (V_{wunsch}).

6. Système de régulation de vitesse selon une ou plusieurs des revendications précédentes, **caractérisé en ce qu'**il est prévu un septième élément de commande pour définir la vitesse de consigne (V_{wunsch}), et le premier élément de commande pour définir la vitesse de consigne (V_{wunsch}) et/ou pour modifier la vitesse de consigne (V_{wunsch}) dans une première direction et le deuxième élément de commande pour définir la vitesse de consigne (V_{wunsch}) et/ou pour modifier la vitesse de consigne (V_{wunsch}) dans une seconde direction sont prévus uniquement pour modifier la vitesse de consigne (V_{wunsch}).

7. Système de régulation de vitesse selon la revendication 6, **caractérisé en ce qu'**au moins lors du premier actionnement du septième élément de commande, la vitesse (Vᵢₛₜ) actuellement pratiquée par le véhicule automobile est prise comme vitesse de consigne (V_{wunsch}).

8. Système de régulation de vitesse selon une ou plusieurs des revendications précédentes, **caractérisé en ce que** le premier élément de commande pour définir la vitesse de consigne (V_{wunsch}) et/ou pour modifier la vitesse de consigne (V_{wunsch}) dans une première direction et le deuxième élément de commande pour définir la vitesse de consigne (V_{wunsch}) et/ou pour modifier la vitesse de consigne (V_{wunsch}) dans une seconde direction produisent, lors d'un actionnement pour modifier la valeur de la vitesse de consigne (V_{wunsch}), une modification de la valeur par intervalles de même taille.

9. Système de régulation de vitesse selon une quelconque des revendications 6 à 8, **caractérisé en ce que** le cinquième élément de commande, lors d'un nouvel actionnement ayant lieu dans un intervalle de temps prédéfini à la suite d'un premier actionnement, produit la modification de la vitesse de consigne (V_{wunsch}) dans une première direction, et le septième élément de commande, lors d'un nouvel actionnement ayant lieu dans un intervalle de temps prédéfini à la suite d'un premier actionnement, produit la modification de la vitesse de consigne (V_{wunsch}) dans une seconde direction.

10. Système de régulation de vitesse selon la revendication 9, **caractérisé en ce que** le cinquième élément de commande et le septième élément de commande produisent, lors d'un actionnement pour modifier la valeur de la vitesse de consigne (V_{wunsch}) une modification de la valeur par intervalles de même taille, sachant que ces intervalles sont différents des intervalles prévus lors de l'actionnement du premier élément de commande pour définir la vitesse de consigne (V_{wunsch}) et/ou pour modifier la vitesse de consigne (V_{wunsch}) dans une première direction et du deuxième élément de commande pour définir la vitesse de consigne (V_{wunsch}) et/ou pour modifier la vitesse de consigne (V_{wunsch}) dans une seconde direction.

11. Système de régulation de vitesse selon une ou plusieurs des revendications précédentes, **caractérisé en ce que** l'élément de commande multifonctionnel présente au moins un élément de commande pour définir une vitesse de consigne (V_{wunsch}) et/ou pour modifier la vitesse de consigne (V_{wunsch}) dans deux directions.

12. Système de régulation de vitesse selon une ou plusieurs des revendications précédentes, **caractérisé en ce qu'**au moins une partie des éléments de commande (ON/OFF, CANCEL) est réalisée sous forme de commutateurs à touche.

13. Système de régulation de vitesse selon une ou plusieurs des revendications précédentes, **caractérisé en ce qu'**au moins une partie des éléments de commande est réalisée sous la forme de commutateurs à bascule.

14. Système de régulation de vitesse selon une ou plusieurs des revendications précédentes, **caractérisé en ce que** l'élément de commande multifonctionnel (1) est disposé sur le corps d'impact (4) au voisinage d'un dispositif de commande (2).

15. Système de régulation de vitesse selon une ou plusieurs des revendications précédentes, **caractérisé en ce que** l'élément de commande multifonctionnel (1) et le dispositif de commande (2) sont disposés à déplacement indépendamment l'un de l'autre.

16. Système de régulation de vitesse selon une ou plusieurs des revendications précédentes, **caractérisé en ce que** l'élément de commande multifonctionnel (1) présente des éléments de commande pour commander une régulation automatique de distance.

17. Système de régulation de vitesse selon la revendication 16, **caractérisé en ce qu'**il est prévu un sixième élément de commande (BE) pour modifier manuellement la valeur, utilisée pour l'exécution de la régulation automatique de distance, d'un temps de suite par rapport à un véhicule précédent.

18. Système de régulation de vitesse selon la revendication 17, **caractérisé en ce que** le sixième élément de commande (BE) est réalisé sous forme de molette.

19. Système de régulation de vitesse selon la revendication 18, **caractérisé en ce que** l'élément, de commande (BE) est réalisé sans butée mécanique et produit, lors d'un actionnement par rotation, un signal électrique pour chaque rotation partielle.
